# EUROPEAN PATENT APPLICATION

(11) **EP 4 464 666 A1**
(43) Date of publication of application: **20.11.2024**
(21) Application number: 23740291.2
(22) Date of filing: 12.01.2023
(51) Int. Cl.: C01F 7/021, C08K 9/02, C08L 101/00, C09C 1/64, C09C 3/06, C09D 7/62, H01B 1/20

(54) **COATED ALUMINUM OXIDE PARTICLES, METHOD FOR MANUFACTURING SAME, AND USE THEREOF**

(30) Priority: 13.01.2022 JP 2022003655
(71) Applicant: Ishihara Sangyo Kaisha, Ltd., Osaka-shi, Osaka 550-0002 (JP)
(72) Inventor: TANAKA Yuki, Osaka-shi, Osaka 550-0002 (JP)
(74) Representative: Grünecker Patent- und Rechtsanwälte PartG mbB
(86) International application number: PCT/JP2023/000578
(87) International publication number: WO 2023/136283

(57) **Abstract**

Provided are coated aluminum oxide particles having sufficient electric conductivity, and a method for manufacturing same. An antimony-doped tin oxide is contained in the surfaces of the aluminum oxide particles, such that the contained amount of an antimony component with respect to a tin component is 26-45 mass% when expressed as oxides as (Sb₂O₃/SnO₂). To a dispersion liquid containing aluminum oxide particles and a solvent, an alkali and a hydrochloric acid solution, containing an antimony component and a tin component such that the components are contained at an amount of 26-45 mass% when expressed as oxides as (Sb₂O₃/SnO₂), are mixed to cause a tin hydroxide that contains the antimony component to be deposited on the surfaces of the aluminum oxide particles. Then, the aluminum oxide particles are baked at a temperature of 400-800°C so as to be coated with an antimony-doped tin oxide.

## Description

### TECHNICAL FIELD

The present invention relates to aluminum oxide particles coated with antimony-doped tin oxide, a method for manufacturing the same, and a conductive material, a solvent composition, a resin composition, a paint composition, and a paint film that contain the particles.

### BACKGROUND ART

A conductive material in which a substrate made of titanium dioxide particles is coated with a conductive substance such as antimony-doped tin oxide is used as an antistatic coating material for floors and walls, or a filler of a primer coating material during electrostatic coating of automobiles. The conductive material is also used as an external additive for toner for the purpose of charge adjustment and fluidization of toner in electrophotographic applications.

In recent years, the rank of the titanium dioxide particles in "Monographs on the Identification of Carcinogenic Hazards to Humans" classified by International Agency for Research on Cancer (IARC) has been changed from Group 3 (not classifiable as to its carcinogenicity to humans) to Group 2B (possibly carcinogenic to humans). As a result, there has been a concern that conductive materials using titanium dioxide particles cannot be certified by some environmental protection certification systems.

In view of such circumstances, aluminum oxide particles have been lined up as a candidate for an alternative material for titanium dioxide particles.

For example, Patent Literature 1 discloses a white conductive powder in which the surface of a base powder is coated with antimony and an oxide made of an element of tin, and the content of antimony doped on tin oxide is 8 to 25 wt% in terms of the antimony with respect to the tin oxide. The Examples thereof describe that Sb/SnO₂ is mixed to be 0.14 (16.7 mass% in terms of the oxides as (Sb₂O₃/SnO₂)) to coat the surfaces of aluminum oxide particles with an antimony-doped tin oxide conductive layer.

Also, Patent Literature 2 discloses that as conductive particles having a coating layer made of conductive tin oxide containing a dopant element on the surface of a core material, the dopant element is contained in an amount of 0.01 mol or more and 0.60 mol or less with respect to 1 mol of tin in the entire coating layer. Patent Literature 2 further describes, in the Examples thereof, that an Al₂O₃ substrate is coated with a dopant in an amount of 0.01 mol (which is 1.0 mass% in terms of oxides as (Sb₂O₃/SnO₂)) with respect to 1 mol of Sn.

Here, it should be noted that the phrase "in terms of oxides as (Sb₂O₃/SnO₂)" refers to a value obtained by: converting the content of the antimony component and the content of the tin component into a content as Sb₂O₃ (which is also referred to as a value of the antimony component in terms of Sb₂O₃) and a content as SnO₂ (which is also referred to as a value of the tin component in terms of SnO₂), respectively; and representing a ratio of the content of the antimony component to the content of the tin component as a ratio of the content as Sb₂O₃ to the content as SnO₂, that is, dividing the content as Sb₂O₃ by the content as SnO₂, and the value is represented by mass%.

### CITATION LIST

### PATENT LITERATURE

PATENT LITERATURE 1: JP H09-249820 A
PATENT LITERATURE 2: WO 2015/060232 A1

### SUMMARY OF INVENTION

### TECHNICAL PROBLEM

The conductivity of the conductive material manufactured by the above-described prior art has not yet reached a desired level, and further improvement in conductivity is required for an alternative material to the conductive material made of titanium dioxide particles. Also, in the case of being used for a white pigment having the conductivity, and the like, it is necessary to further improve the conductivity while having sufficient whiteness. Also, depending on the uses, excellent disintegrability may be required.

### SOLUTION TO PROBLEM

According to the study of the present inventors, it has been found that desired conductivity cannot be obtained even if the conductive treatment technique to titanium dioxide particles is applied as is to aluminum oxide particles. Therefore, the present inventors have made intensive studies, and have found that by optimizing the antimony-doped tin oxide coating treatment according to the properties of the aluminum oxide particles, desired conductivity can be exhibited even when the aluminum oxide particles are used as a substrate, thereby completing the present invention.

That is, the present invention includes the following inventions (1) to (19).
(1) Coated aluminum oxide particles comprising an antimony-doped tin oxide contained in surfaces of aluminum oxide particles, wherein a content of the antimony component with respect to a content of the tin component is 26 mass% or more and 45 mass% or less in terms of oxides as (Sb₂O₃/SnO₂).
(2) Coated aluminum oxide particles comprising an antimony-doped tin oxide contained in surfaces of aluminum oxide particles, wherein a content of the antimony component with respect to a content of the tin component is 30 mass% or more and 45 mass% or less in terms of oxides as (Sb₂O₃/SnO₂).
(3) The coated aluminum oxide particles according to (1) or (2), wherein a content of the antimony-doped tin oxide in terms of oxides (that is, in terms of a total amount of Sb₂O₃ and SnO₂) is 10 mass% or more and 40 mass% or less with respect to an amount of the aluminum oxide particles.
(4) The coated aluminum oxide particles according to any one of (1) to (3), wherein a content of sodium in terms of oxides of the sodium (that is, in terms of Na₂O) is 0.3 mass% or less with respect to an amount when all constituent components of the coated aluminum oxide particles are expressed as oxides.
(5) The coated aluminum oxide particles according to any one of (1) to (4), wherein a cumulative frequency of particles having a particle size of more than 1 µm is 21% or less in a volume-based particle size distribution.
(6) The coated aluminum oxide particles according to any one of (1) to (4), wherein a cumulative frequency of particles having a particle size of more than 1 µm is 20% or less in a volume-based particle size distribution.
(7) The coated aluminum oxide particles according to any one of (1) to (6), wherein a L value of powder is 70 or more.
(8) A conductive material comprising the coated aluminum oxide particles according to any one of (1) to (7).
(9) A solvent composition comprising the coated aluminum oxide particles according to any one of (1) to (7) and a solvent.
(10) A resin composition comprising the coated aluminum oxide particles according to any one of (1) to (7) and a resin.
(11) A paint composition comprising the coated aluminum oxide particles according to any one of (1) to (7) and a paint resin.
(12) A paint film comprising the paint composition according to (11).
(13) A method for manufacturing coated aluminum oxide particles, the method comprising:
   mixing a hydrochloric acid solution containing an antimony component and a tin component with an alkali in a dispersion liquid containing aluminum oxide particles and an aqueous dispersion medium such that the antimony component with respect to the tin component is contained in an amount of 26 mass% or more and 45 mass% or less in terms of oxides as (Sb₂O₃/SnO₂); and
   firing the mixture at a temperature of 400°C or higher and 800°C or lower.
(14) A method for manufacturing coated aluminum oxide particles, the method comprising:
   mixing a hydrochloric acid solution containing an antimony component and a tin component with an alkali in a dispersion liquid containing aluminum oxide particles and an aqueous dispersion medium such that the antimony component with respect to the tin component is contained in an amount of 30 mass% or more and 45 mass% or less in terms of oxides as (Sb₂O₃/SnO₂);
   precipitating a tin hydroxide that contains the antimony component on surfaces of the aluminum oxide particles; and
   firing the mixture at a temperature of 400°C or higher and 800°C or lower to be coated with an antimony-doped tin oxide.
(15) The method for manufacturing the coated aluminum oxide particles according to (13) or (14), wherein a total amount of the tin component and the antimony component that are contained in the hydrochloric acid solution in terms of oxides (that is, in terms of a total amount of Sb₂O₃ and SnO₂) is 10 mass% or more and 40 mass% or less with respect to the amount of the aluminum oxide particles.
(16) The method for manufacturing the coated aluminum oxide particles according to any one of (13) to (15), wherein a temperature of the dispersion liquid is maintained at 50°C or higher and 95°C or lower while mixing the hydrochloric acid solution containing the tin component and the antimony component with the alkali.
(17) The method for manufacturing the coated aluminum oxide particles according to any one of (13) to (15), wherein a temperature of the dispersion liquid is maintained at 50°C or higher and 90°C or lower while mixing the hydrochloric acid solution containing the tin component and the antimony component with the alkali.
(18) The method for manufacturing the coated aluminum oxide particles according to any one of (13) to (17), wherein a pH of the dispersion liquid is maintained at 4 or more and 10 or less while mixing the hydrochloric acid solution containing the tin component and the antimony component with the alkali.
(19) The method for manufacturing the coated aluminum oxide particles according to any one of (13) to (18), wherein the alkali is sodium hydroxide.

### ADVANTAGEOUS EFFECTS OF INVENTION

The aluminum oxide particles coated with antimony-doped tin oxide according to the present invention have sufficient conductivity, and thus can be appropriately used as an alternative material for conductive titanium dioxide particles. Furthermore, the aluminum oxide particles coated with antimony-doped tin oxide according to the present invention can also be used as a conductive white pigment by adjusting whiteness. Also, the aluminum oxide particles coated with antimony-doped tin oxide according to the present invention enable to provide excellent disintegrability.

### BRIEF DESCRIPTION OF DRAWINGS

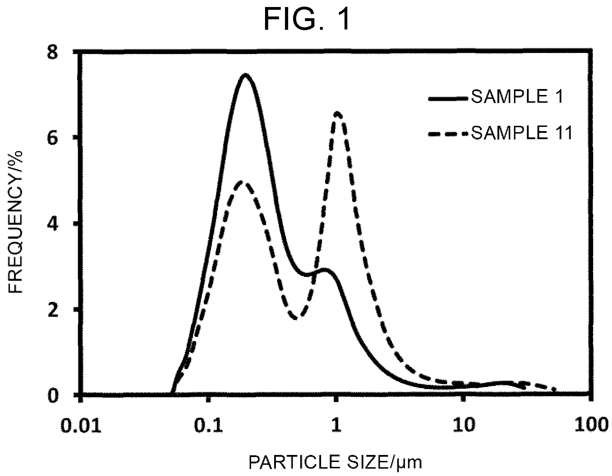

FIG. 1 shows a particle size distribution obtained by measuring Sample 1 and Sample 11 with a laser diffraction/scattering particle size distribution measuring apparatus.

### DESCRIPTION OF EMBODIMENTS

In the coated aluminum oxide particles of the present invention, aluminum oxide particles are used as a substrate, and the surface of the substrate is coated with antimony-doped tin oxide.

In the coated aluminum oxide particles of the present invention, aluminum oxide is used as a substrate. The aluminum oxide mentioned here is a compound represented by chemical formula Al₂O₃, and is also called alumina. Aluminum oxide has a crystal structure such as a trigonal crystal system (α-alumina) or a cubic crystal system (γ-alumina), but may have any crystal structure.

The aluminum oxide particles have a cumulative 50% diameter (D50) in a volume-based particle size distribution of preferably 0.1 µm or more and 1.0 µm or less, and more preferably 0.1 µm or more and 0.5 µm or less. By using the aluminum oxide particles as described above, whiteness of the coated aluminum oxide particles can be improved. The cumulative 50% diameter (D50) is calculated from a particle size distribution obtained when the aluminum oxide particles dispersed in a solvent are measured by means of a laser diffraction/scattering particle size distribution measuring apparatus. As the laser diffraction/scattering particle size distribution measuring apparatus, for example, LA-950 series, LA-960 series (up to here, manufactured by "HORIBA, Ltd."), MT-3300 (manufactured by "MicrotracBEL Corp."), and the like can be used.

The aluminum oxide particles may contain various impurities unavoidable in manufacturing. Examples of the impurities include iron, silicon, calcium, gallium, chromium, nickel, zinc, zirconium, magnesium, copper, and sodium. Here, as described later, since sodium lowers conductivity of the coated aluminum oxide particles of the present invention, a content of a sodium component (in terms of Na₂O) contained as an impurity is preferably 500 ppm or less, more preferably 100 ppm or less, and still more preferably 50 ppm or less on a mass basis of aluminum oxide. The content of impurities is measured by means of, for example, an ICP emission spectroscopy, an atomic absorption spectroscopy, an X-ray fluorescence spectroscopy, or the like.

The aluminum oxide particles may be formed by coating the surfaces of the particles with other inorganic compounds. As the coating material, a known inorganic surface treatment material can be used, and for example, at least one oxide or hydroxide of zinc, silicon, titanium, aluminum, zirconium, tin, and cerium can be used. The coating as used here may be a state in which the inorganic compound is coating the entire aluminum oxide particles in a layer shape, or a state in which a hole is formed in a part of the coating, for example, a discontinuous coating state in which the inorganic compound exists in an island shape on the surface of the aluminum oxide particles, and the state of the coating is not particularly limited.

The aluminum oxide particles can be synthesized by means of a known method. As the aluminum oxide particles, various commercially available products can also be used. Examples of the commercially available products include SMM-22 (manufactured by "Nippon Light Metal Company, Ltd."), AKP-15, AKP-20, AKP-30, AKP-50, AKP-53, AKP-700, AKP-3000, AL-41-01, AL-43A, AL-420A (up to here, manufactured by "SUMITOMO CHEMICAL COMPANY, LIMITED"), APA-0.5, AHPA-0.5 (up to here, manufactured by "Sasol Limited"), SAO-020A, SAO-020E, and SAO-020N (up to here, manufactured by "Sinoceramics, Inc.").

The coated aluminum oxide particles of the present invention have the coating of an antimony-doped tin oxide on the surface of the aluminum oxide particles of the substrate. The coating as used here may be a state in which the antimony-doped tin oxide particles are coating the entire aluminum oxide particles in a layer shape, or a state in which a hole is formed in a part of the coating, for example, a discontinuous coating state in which the antimony-doped tin oxide exists in an island shape on the surface of the aluminum oxide particles, and the state of the coating is not particularly limited. However, from the viewpoint of conductivity, the state in which the antimony-doped tin oxide particles are coating the entire aluminum oxide particles in a layer shape is desirable. The antimony-doped tin oxide is obtained by making antimony a solid solution in a crystal of tin oxide, and thus can impart conductivity to the tin oxide.

In the coated aluminum oxide particles of the present invention, the content of the antimony component in the coating of the antimony-doped tin oxide with respect to the content of the tin component is 26 mass% or more and 45 mass% or less, and preferably 30 mass% or more and 45 mass% or less in terms of oxides as (Sb₂O₃/SnO₂).

Here, it should be noted that the above phrase "in terms of oxides as (Sb₂O₃/SnO₂)" refers to, as described above, a value obtained by: converting the content of the antimony component and the content of the tin component into a content of Sb₂O₃ and a content of SnO₂, respectively; and representing the ratio of the content of the antimony component to the content of the tin component as the ratio of the content of Sb₂O₃ to the content of SnO₂, that is, dividing the content of Sb₂O₃ by the content of SnO₂, and the value is represented by mass%. Therefore, the content of the antimony component in the above range means the following: in the antimony-doped tin oxide coating the aluminum oxide particles, a ratio (mass%) of an amount of the antimony component contained in the above antimony-doped tin oxide in terms of Sb₂O₃ to an amount of the tin component contained in the above antimony-doped tin oxide in terms of SnO₂.

The reason why the content of the antimony component is set as described above is as follows.

According to the study of the present inventors, it has been found that a case where aluminum oxide is used as a substrate is more difficult to ensure conductivity as a conductive material than a case where titanium dioxide is used as a substrate. Although the mechanism is not clear, it is presumed that a part of the aluminum component contained in the substrate moves to the coating of antimony-doped tin oxide, thereby exerting a bad influence on the conductivity. Therefore, in the case of using aluminum oxide as a substrate, it is necessary to increase the content of the antimony component contributing to appearance of conductivity compared with the case of using titanium dioxide as a substrate. Therefore, from the viewpoint of conductivity, it is important to set the content of the antimony component with respect to the content of the tin component to 26 mass% or more in terms of the above oxides. On the other hand, the upper limit of the content of the antimony component is not particularly limited from the viewpoint of conductivity, but since improvement of conductivity cannot be expected even when the content exceeds 45 mass%, it is sufficient that the content of the antimony component with respect to the content of the tin component is 45 mass% in terms of the above oxides.

When the coated aluminum oxide particles of the present invention are used as a white conductive material, the content of the antimony component with respect to the content of the tin component is preferably 45 mass% or less in terms of the above oxides from the viewpoint of whiteness.

The content of the antimony component with respect to the content of the tin component is calculated by the following: converting each of the antimony component and the tin component on an oxide basis (i.e., the antimony component: Sb₂O₃, the tin component: SnO₂); and dividing the content of the converted antimony component by the content of the converted tin component. In the present application, the content of the antimony component with respect to the content of the tin component, which is thus calculated, may be described as "in terms of oxides as (Sb₂O₃/SnO₂)" or "Sb₂O₃/SnO₂".

In the coated aluminum oxide particles of the present invention, the coating amount of the antimony-doped tin oxide in terms of oxides (that is, in terms of a total amount of Sb₂O₃ and SnO₂) is preferably 10 mass% or more and 40 mass% or less, and more preferably 20 mass% or more and 35 mass% or less with respect to the amount of substrate particles made of aluminum oxide (Al₂O₃) (that is, aluminum oxide particles). The content of 10 mass% or more is preferable in the following respects: the mass ratio of the antimony-doped tin oxide coating to the substrate particles made of aluminum oxide is sufficient, and thus the situation that desired conductivity cannot be obtained due to insufficient mass ratio can be more effectively avoided. On the other hand, even if the coating amount of the antimony-doped tin oxide is too large, effective improvement of the conductivity cannot be expected, and therefore the coating amount is preferably 40 mass% or less.

Here, it should be noted that the above phrase "in terms of oxides (that is, in terms of a total amount of Sb₂O₃ and SnO₂)" may be described as "Sb₂O₃ + SnO₂" in the present application, and this means that the content of the antimony component and the content of the tin component are converted into the content as Sb₂O₃ and the content as SnO₂, respectively, and both are added. Therefore, the coating amount of antimony-doped tin oxide in the above range means the ratio (mass%) of the sum (i.e., total) of the amount of antimony component in terms of Sb₂O₃ and the amount of tin component in terms of SnO₂ that are contained in the antimony-doped tin oxide coating the aluminum oxide particles with respect to the content of the aluminum oxide (Al₂O₃) particles in the coated aluminum oxide particles (that is, the content of the Al₂O₃ component in the coated aluminum oxide particles).

The coating amount of antimony-doped tin oxide is calculated by converting the contents of the antimony component and the tin component that are contained in the coated aluminum oxide particles of the present invention on an oxide basis (i.e., antimony component: Sb₂O₃, tin component: SnO₂), and dividing the sum of the content of the antimony component and the content of the tin component by the content of the aluminum oxide. In the present application, the coating amount of antimony-doped tin oxide thus calculated may be described as "(Sb₂O₃ + SnO₂)/Al₂O₃".

In the coated aluminum oxide particles of the present invention, the content of the sodium component in terms of oxides thereof (that is, in terms of Na₂O) is preferably 0.3 mass% or less, more preferably 0.2 mass% or less, and still more preferably 0.01 mass% or less with respect to the amount when all constituent components of the coated aluminum oxide particles are expressed as oxides (that is, the amount obtained by converting all constituent components of the coated aluminum oxide particles into the contents as oxides, respectively). When the content of the sodium component is within the above range, a decrease in conductivity due to the sodium component included in the coated aluminum oxide particles can be more effectively avoided. Therefore, the sodium component is preferably in the above range.

The contents of the tin component, the antimony component, the sodium component, and the aluminum oxide component that are contained in the coated aluminum oxide particles of the present invention are measured by means of a fluorescent X-ray apparatus, for example. As such an apparatus, for example, ZSX Primus IV, RIX-2100 (manufactured by "Rigaku Corporation") can be used.

In the coated aluminum oxide particles of the present invention, the cumulative 50% diameter (D50) in a volume-based particle size distribution by means of a laser diffraction/scattering method is preferably 0.1 µm or more and 1.0 µm or less, and more preferably 0.1 µm or more and 0.5 µm or less. Within the above range, the whiteness of the coated aluminum oxide particles is improved.

Here, it should be noted that since the increase in the particle size due to the coating with antimony-doped tin oxide is extremely small, the influence thereof on the particle size of the aluminum oxide particles of the substrate (i.e., raw material) can be ignored, so that it can be considered as the particle size of the aluminum oxide particles is not changed by the above coating.

In the coated aluminum oxide particles of the present invention, in a volume-based particle size distribution by means of a laser diffraction/scattering method, the cumulative frequency of particles having a particle size of more than 1 µm is preferably 21% or less, more preferably 20% or less, and still more preferably 18% or less. The particles larger than 1 µm are considered to be a plurality of agglomerated coated aluminum oxide particles. By reducing the ratio of such agglomerated particles (that is, the coated aluminum oxide particles having a particle size of more than 1 µm), the time for disintegrating the coated aluminum oxide particles to a desired particle size (disintegrating time) can be shortened.

The disintegrating time is indicated by the time taken until the cumulative 50% diameter (D50) of the coated aluminum oxide particles is disintegrated to 0.4 µm or less. In the indicator, the disintegrating time is preferably less than 20 minutes, and more preferably 15 minutes or less. In the case where the disintegrating time is as described above, it can be said as having excellent disintegrability. The ratio of particles larger than 1 µm is calculated from a particle size distribution obtained when the coated aluminum oxide particles of the present invention dispersed in a solvent are measured by means of a laser diffraction/scattering particle size distribution measuring apparatus. Also, 5 g of coated aluminum oxide particles, 30 g of pure water, and 30 g of glass beads are each weighed, placed in a glass container, disintegrated by means of a dispersing machine (Paint Shaker, manufactured by "Red Devil Equipment Company"), and the time until the cumulative 50% diameter (D50) reaches 0.4 µm or less is measured as the disintegrating time.

The coated aluminum oxide particles of the present invention may be coated with an organic compound as necessary. The coating amount of the organic compound can be appropriately set. Examples of the organic compound include:
(1) organosilicon compounds ((a) organopolysiloxanes (dimethylpolysiloxane, methylhydrogenpolysiloxane, methylmethoxypolysiloxane, methylphenylpolysiloxane, dimethylpolysiloxane diol, dimethylpolysiloxane dihydrogen, and the like, or copolymers thereof), (b) organosilanes (aminosilane, epoxysilane, methacrylsilane, vinylsilane, phenylsilane, mercaptosilane, chloroalkylsilane, alkylsilane, fluoroalkylsilane, and the like, or hydrolysis products thereof), (c) organosilazanes (hexamethylsilazane, hexamethylcyclotrisilazane, and the like), and the like);
(2) organometallic compounds ((a) an organic titanium compound (triisostearoyloxy-isopropoxytitanium, aminoalkoxytitanium, phosphoric acid ester titanium, carboxylic acid ester titanium, sulfonic acid ester titanium, titanium chelate, phosphorous acid ester titanium complex, and the like), (b) an organic zirconium compound (carboxylic acid ester zirconium, zirconium chelate, and the like), and the like);
(3) polyols (trimethylolpropane, trimethylolethane, pentaerythritol, and the like);
(4) alkanolamines (monoethanolamine, diethanolamine, triethanolamine, monopropanolamine, dipropanolamine, tripropanolamine, and the like) or derivatives thereof (organic acid salts such as acetate, oxalate, tartrate, formate, and benzoate);
(5) higher fatty acids (stearic acid, lauric acid, oleic acid, and the like) or metal salts thereof (aluminum salt, zinc salt, magnesium salt, calcium salt, barium salt, and the like); and
(6) higher hydrocarbons (paraffin wax, polyethylene wax, and the like) or derivatives thereof (perfluoride and the like).

The method of the present invention for manufacturing the coated aluminum oxide particles includes: mixing a hydrochloric acid solution containing an antimony component and a tin component with an alkali in a dispersion liquid containing aluminum oxide particles and an aqueous dispersion medium such that the antimony component with respect to the tin component is contained in an amount of 26 mass% or more and 45 mass% or less in terms of oxides as (Sb₂O₃/SnO₂); and firing the mixture at a temperature of 400°C or higher and 800°C or lower.

First, a dispersion liquid containing aluminum oxide particles and an aqueous dispersion medium (the dispersion liquid is also referred to as an "aluminum oxide dispersion liquid") is prepared. As the aluminum oxide particles, those described above can be used. The particle size of the aluminum oxide particles may be appropriately adjusted by means of a known classifying device or grinding machine. As the classifying device, for example, a vibration sieve device, a gravity classifying device, a hydraulic classifying device, a centrifugal classifying device, or the like can be used. As the grinding machine, for example, a wet grinding machine such as a bead mill or a sand mill, or a dry grinding machine such as a hammer mill, a pin mill, a roller mill, or a jet mill can be used.

The aqueous dispersion medium contains water as a main component, that is, has a water content of 50 mass% or more. The content of water in the aqueous dispersion medium is preferably 80 mass% or more, more preferably 90 mass% or more, and still more preferably 95 mass% or more. Examples of the component other than water include various organic solvents that are dissolved in water (i.e., methanol, ethanol, isopropanol, butanol, acetone, methyl ethyl ketone, tetrahydrofuran, and the like).

As the aluminum oxide dispersion liquid, the liquid obtained by dispersing aluminum oxide particles and an aqueous dispersion medium by means of a known method may be used. As the dispersion method, for example, a blade-type stirrer, a dispersing machine, a homo-mixer, or the like may be used, a wet grinding machine such as a bead mill or a sand mill may be used, or a combination thereof may be used. Also, additives such as a dispersant, an emulsifier, a thickener, an antifoaming agent, a surface adjuster, an anti-settling agent, and a pH adjuster may be contained as necessary.

The concentration of the aluminum oxide particles in the aluminum oxide dispersion liquid is preferably 10 mass% or more and 40 mass% or less, and more preferably 15 mass% or more and 35 mass% or less. The content of 10 mass% or more is preferable in that a decrease in the produced amount of the coated aluminum oxide particles can be more effectively avoided. On the other hand, the content of 40 mass% or less is preferable from the viewpoint that difficulty in forming an antimony-doped tin oxide coating on the surfaces of aluminum oxide particles due to thickening of the dispersion liquid can be effectively avoided.

Also, the method of the present invention may further include a step of coating the surface of the aluminum oxide particles with an inorganic compound. As a coating method thereof, a known method can be used, and for example, at least one compound of zinc, silicon, titanium, aluminum, zirconium, tin, and cerium may be added to the aluminum oxide dispersion liquid, and an acid and/or an alkali may be added thereto to coat the surface of the aluminum oxide particles with the inorganic compound.

Next, a hydrochloric acid solution containing a tin component and an antimony component is prepared. Examples of the tin component include tin halide such as tin chloride, tin oxide, tin hydroxide, sulfates of tin, inorganic acid salts of tin (e.g., stannous chloride, stannic chloride) such as tin nitrate, and the like, and the components may be used alone or as a mixture of two or more thereof. Among the components, from the viewpoint of reducing the content of the sodium component in the coated aluminum oxide particles, it is preferable not to use a sodium-containing tin compound such as sodium stannate but to use a sodium-free tin compound such as tin halide.

Examples of the antimony component include antimony halide such as antimony chloride, antimony oxide, antimony hydroxide, and inorganic acid salt such as sulfate salt of antimony, and these components may be used alone or as a mixture of two or more thereof. Among the components, from the viewpoint of reducing the content of the sodium component in the coated aluminum oxide particles, it is preferable not to use a sodium-containing antimony compound such as sodium antimonate but to use a sodium-free antimony compound such as antimony halide.

The method for dissolving the tin component and the antimony component in the hydrochloric acid solution is not particularly limited. The tin component and the antimony component may be simultaneously dissolved in the hydrochloric acid solution, a solution obtained by dissolving the tin component in the hydrochloric acid solution and a solution obtained by dissolving the antimony component in the hydrochloric acid solution may be separately prepared and mixed, or a solution may be obtained by dissolving either the tin component or the antimony component in the hydrochloric acid solution and then dissolving the other component. Among the methods, it is preferable to dissolve the tin component in a solution obtained by dissolving the antimony component in the hydrochloric acid solution. By doing it like this, the precipitation of the antimony compound in the hydrochloric acid solution can be reduced, thereby uniformly coating aluminum oxide particles with antimony-doped tin oxide. The concentration of hydrochloric acid in the hydrochloric acid solution is not particularly limited. Also, the above dissolution may be performed while being stirred with a known stirrer such as a blade-type stirrer, a dispersing machine, or a homo-mixer.

When the tin component and the antimony component are dissolved in the hydrochloric acid solution, the tin component and the antimony component are set such that the antimony component with respect to the tin component is 26 mass% or more and 45 mass% or less, preferably 30 mass% or more and 45 mass% or less, more preferably 30 mass% or more and 40 mass% or less, and still more preferably 30 mass% or more and 35 mass% or less in terms of oxides as (Sb₂O₃/SnO₂). By doing it like this, as for the tin component and the antimony component in the coated aluminum oxide particles, the content of the antimony component with respect to the tin component can be set to the above-described range in terms of oxides as (Sb₂O₃/SnO₂), whereby the conductivity of the coated aluminum oxide particles can be improved, and the coated aluminum oxide particles can have an appropriate whiteness.

Subsequently, the hydrochloric acid solution containing the tin component and the antimony component and an alkali are mixed with the aluminum oxide dispersion liquid, and tin hydroxide containing the antimony component is precipitated on the surface of the aluminum oxide particles. The ratio of a total amount of the tin component and the antimony component that are contained in the hydrochloric acid solution in terms of oxides (that is, in terms of a total amount of Sb₂O₃ and SnO₂) is preferably 10 mass% or more and 40 mass% or less, and more preferably 20 mass% or more and 35 mass% or less with respect to the aluminum oxide (Al₂O₃) component in the aluminum oxide particles. By doing it like this, the coating amount of antimony-doped tin oxide on the aluminum oxide particles can be set within the above range.

It should be noted that the phrase "in terms of oxides (that is, in terms of a total amount of Sb₂O₃ and SnO₂)" may be described as "Sb₂O₃ + SnO₂" in the present application, and this means that the content of the antimony component and the content of the tin component are converted into the content as Sb₂O₃ and the content as SnO₂, respectively, and both are added. Therefore, the ratio of the total amount of the tin component and the antimony component that are contained in the hydrochloric acid solution in the above range means the ratio (mass%) of the sum (total) of the amount of the antimony component in terms of Sb₂O₃ and the amount of the tin component in terms of SnO₂ in the hydrochloric acid solution with respect to the amount of aluminum oxide (Al₂O₃) particles contained in the aluminum oxide dispersion liquid. The total amount of the tin component and the antimony component that are contained in the hydrochloric acid solution is calculated by converting the contents of the antimony component and the tin component on an oxide basis (i.e., antimony component: Sb₂O₃, tin component: SnO₂), and dividing the sum (total) of the content of the antimony component and the content of the tin component by the amount of aluminum oxide (Al₂O₃) particles contained in the aluminum oxide dispersion liquid. In the present application, the total amount of the tin component and the antimony component that are contained in the hydrochloric acid solution thus calculated may be described as "(Sb₂O₃ + SnO₂)/Al₂O₃".

Examples of the alkali include hydroxides and carbonates of alkali metal such as sodium hydroxide, potassium hydroxide, sodium carbonate, and potassium carbonate, and ammonia, and the alkalis may be used alone or as a mixture of two or more thereof. Further, the alkali may be used as a powder, or may be used as a solution by being mixed with a solvent such as water, but it is preferable to use the alkali as a solution since the alkali can be uniformly mixed with the hydrochloric acid solution. In particular, it is preferable to use a hydroxide of alkali metal, and in particular, it is preferable to use sodium hydroxide. By using sodium hydroxide, the specific surface area of tin hydroxide containing an antimony component precipitated on the surfaces of the aluminum oxide particles can be made smaller, and accordingly, agglomeration between aluminum oxide particles coated with antimony-containing tin hydroxide (the aluminum oxide particles coated with antimony-containing tin hydroxide are referred to as "antimony-containing tin hydroxide-coated aluminum oxide particles") can be reduced. As a result, the agglomeration of the coated aluminum oxide particles obtained by firing the particles is also reduced, and the disintegrating time to a desired particle size can be shortened.

However, when sodium hydroxide is used as the alkali, there is a concern that a sodium component remains in the coated aluminum oxide particles, thereby decreasing the conductivity. With this respect, the sodium component contained in the antimony-containing tin hydroxide-coated aluminum oxide particles can be removed by sufficiently washing the antimony-containing tin hydroxide-coated aluminum oxide particles with pure water or the like.

The method for mixing a hydrochloric acid solution containing a tin component and an antimony component and an alkali with the aluminum oxide dispersion liquid is not particularly limited. The hydrochloric acid solution containing the tin component and the antimony component may be added to the aluminum oxide dispersion liquid, and then the alkali may be added thereto. Also, the alkali may be added to the aluminum oxide dispersion liquid, and then the hydrochloric acid solution containing the tin component and the antimony component may be added thereto. Also, the hydrochloric acid solution containing the tin component and the antimony component and the alkali may be simultaneously added. Among these methods, it is preferable to simultaneously add the hydrochloric acid solution containing the tin component and the antimony component and the alkali. By doing it like this, the coating of the aluminum oxide particles with the antimony-containing tin hydroxide can be performed while maintaining the pH of the aluminum oxide dispersion liquid in a certain range, thereby improving the conductivity of the antimony-doped tin oxide. Also, the mixing may be performed while being stirred with a known stirrer such as a blade-type stirrer, a dispersing machine, or a homo-mixer. It should be noted that the mixing time is not particularly limited, but is preferably 10 minutes or more and 120 minutes or less for the reasons that the entire aluminum oxide particles can be coated with the antimony-doped tin oxide particles.

While the hydrochloric acid solution containing the tin component and the antimony component and the alkali are mixed with the aluminum oxide dispersion liquid, the liquid temperature of the aluminum oxide dispersion liquid is preferably 50°C or higher and 95°C or lower, more preferably 55°C or higher and 95°C or lower, and still more preferably 60°C or higher and 95°C or lower. The aluminum oxide dispersion liquid may be heated to a liquid temperature of 50°C or higher and 90°C or lower, 55°C or higher and 90°C or lower, or 60°C or higher and 90°C or lower. In a temperature range in which the liquid temperature of the aluminum oxide dispersion liquid is 50°C or higher and 95°C or lower, the precipitation rate of tin hydroxide containing the antimony component is not slow, the difference between the precipitation rates of antimony and tin is not large, and the composition of the antimony-doped tin oxide coating becomes relatively uniform. As a result, decrease in conductivity can be more effectively avoided, and thus the above temperature range is preferable.

Furthermore, while the hydrochloric acid solution containing the tin component and the antimony component and the alkali are mixed with the aluminum oxide dispersion liquid, the pH is preferably kept at 4 or more and 10 or less, more preferably 5 or more and 9 or less, and still more preferably 6 or more and 8 or less. When the pH is in such a range, the agglomeration of the aluminum oxide particles as a substrate can be reduced. Accordingly, a uniform antimony-doped tin oxide coating can be formed on the surfaces of the aluminum oxide particles, and the conductivity can be more effectively improved.

Also, a dispersion of the antimony-containing tin hydroxide-coated aluminum oxide particles thus obtained may be subjected to an aging treatment as necessary. The condition of the aging treatment is not particularly limited, but the temperature condition thereof is preferably 50°C or higher and 95°C or lower. Also, the temperature may be heated to 60°C or higher and 80°C or lower. The aging time is preferably 10 minutes or more and 120 minutes or less. In addition, it is preferable to keep the pH at 2 or more and 8 or less during the aging treatment, and more preferable to keep the pH at 2 or more and 5 or less. When the pH is in the above range, the content of the sodium component in the coated aluminum oxide particles can be reduced. If necessary, the pH of the dispersion of antimony-containing tin hydroxide-coated aluminum oxide particles may be adjusted by means of a known pH adjuster or the like. Also, the aging treatment may be performed while being stirred with a known stirrer such as a blade-type stirrer, a dispersing machine, or a homo-mixer.

Also, a dispersion of the antimony-containing tin hydroxide-coated aluminum oxide particles may be subjected to solid-liquid separation as necessary. For the solid-liquid separation, a known filtration method can be used. For example, a pressure filtration device such as a rotary press or a filter press, a vacuum filtration device such as a Nutsche or a Moore filter, or the like, which are usually and industrially used, can be used. A centrifugation method or the like can also be used. In the solid-liquid separation, a solid may be washed by means of a known method of using pure water or the like.

Also, a step of drying the solid obtained by means of the solid-liquid separation may be included. When the drying step is included, the drying temperature and the drying time can be appropriately set. For example, the drying temperature is preferably 30°C or higher and 120°C or lower, and the drying time is preferably 0.5 hours or more and 10 hours or less. In the drying step, for example, a heating device such as a dryer, an oven, or an electric furnace can be used.

Next, the antimony-containing tin hydroxide-coated aluminum oxide particles thus obtained are subjected to a firing step. Accordingly, the antimony-containing tin hydroxide-coated aluminum oxide particles become antimony-doped tin oxide-coated aluminum oxide particles. The firing temperature at the firing step is 400°C or higher and 800°C or lower, preferably 450°C or higher and 750°C or lower, and more preferably 500°C or higher and 700°C or lower. By setting the firing temperature to the above range, antimony-doped tin oxide-coated aluminum oxide particles having a desired particle size can be obtained. The firing time is not particularly limited, but is preferably 30 minutes or more and 10 hours or less, and more preferably 1 hour or more and 4 hours or less.

The firing atmosphere in the firing step is not particularly limited, but the firing in the air atmosphere is industrially preferred.

The coated aluminum oxide particles manufactured by the above method may be appropriately subjected to particle size adjustment by means of a known grinding machine, classifying device, or the like.

Also, the method may include a step of performing a surface treatment for coating the surfaces of the coated aluminum oxide particles manufactured by the above-described method with an inorganic compound and/or an organic compound such as: an oxide or a hydroxide of silicon, titanium, aluminum, zirconium, tin, or the like, or a phosphate thereof, as necessary. In this case, as the inorganic compound and/or the organic compound, those described above may be used. As a method of the surface treatment, a conventional surface treatment method used in such as a titanium dioxide pigment can be used. Specifically, in the case of an inorganic compound coating, it is preferable to add the inorganic compound to the dispersion of the coated aluminum oxide particles, thereby coating the particles, and it is more preferable to neutralize the inorganic compound in a slurry and precipitate the inorganic compound, thereby coating the particles. In the case of an organic compound coating, it is preferable to add the organic compound to the powder of the coated aluminum oxide particles, thereby coating the powder, and it is more preferable to include a heating step. The conditions of the heating step can be appropriately set, and for example, the heating temperature is preferably 50°C or higher and 200°C or lower, and the heating time is preferably 10 minutes or more and 120 minutes or less.

The coated aluminum oxide particles of the present invention can be used as a conductive material by utilizing the conductive properties thereof, and the volume resistivity is preferably 50 Ω·cm or less, more preferably 30 Ω·cm or less, and still more preferably 15 Ω·cm or less. The case where the volume resistivity is as described above can be used as the conductive material. The volume resistivity can be calculated from a volume resistance value measured by means of a known measuring apparatus. As the measuring apparatus, for example, a digital multimeter (manufactured by "Yokogawa Test & Measurement Corporation") can be used.

Also, the coated aluminum oxide particles of the present invention can be used as a white pigment by utilizing the whiteness thereof. The whiteness can be evaluated from L value and b value of the powder in a Lab color system. In the coated aluminum oxide particles of the present invention, the L value of the powder of the particles is preferably 60 or more, and more preferably 70 or more. Also, the b value of the powder of the particles is preferably -4.0 or more and 0.3 or less, and more preferably -2.0 or more and 0.0 or less. In the case where the L value and the b value of the powder of the particles are as described above, the particles can be used as a white pigment. The L value and the b value of the powder of the particles can be measured by means of a colorimetric color difference meter or the like, and for example, a spectrophotometer SD 5000 manufactured by "NIPPON DENSHOKU INDUSTRIES CO., LTD." can be used.

Furthermore, the coated aluminum oxide particles of the present invention can also be used as a white conductive material by utilizing the conductivity and the whiteness. In the case of being used as a white conductive material, the coated aluminum oxide particles of the present invention and other colorants or conductive agents may be used in combination.

The coated aluminum oxide particles of the present invention and the conductive material containing the same can be mixed with a solvent to form a solvent composition (specifically, dispersion or suspension). Examples of the solvent used in the solvent composition include an aqueous solvent, a nonaqueous solvent such as alcohol (methanol, ethanol, butanol, isopropyl alcohol, ethylene glycol, or the like), ester (ethyl acetate or the like), ether (butyl cellosolve, propylene glycol-1-monomethyl ether, or the like), ketone (acetone, methyl ethyl ketone, or the like), aromatic hydrocarbon (toluene, xylene, mineral spirit, or the like), or aliphatic hydrocarbon, or a mixed solvent thereof. The solvent composition may contain additives such as a dispersant, an emulsifier, an antifreeze, a pH adjuster, a thickener, and a defoamer as necessary. The concentration of the solid of such a solvent composition can be appropriately set.

A known mixer can be used for the mixing step in preparing the solvent composition descried above. Also, during the mixing, defoaming may be performed as necessary. Examples of the mixer include a biaxial mixer, a triple roll, a sand mill, a planetary mixer, and the like that are usually and industrially used, and a stirrer, a hybrid mixer, a homogenizer, a paint shaker, and the like can be used for laboratory scale. Here, if necessary, a grinding media containing glass, alumina, zirconia, zirconium silicate, or the like as a component may be used.

The coated aluminum oxide particles of the present invention can be mixed with resin to form a resin composition. Examples of the resin used in the resin composition include thermoplastic resin, thermosetting resin, and thermoplastic elastomer.

Examples of the thermoplastic resin include:
(1) general-purpose plastic resin (for example, (a) polyolefin resin (polyethylene, polypropylene, or the like), (b) polyvinyl chloride resin, (c) acrylonitrile butadiene styrene resin, (d) polystyrene resin, (e) methacrylic resin, (f) polyvinylidene chloride resin, or the like);
(2) engineering plastic resin (for example, (a) polycarbonate resin, (b) polyethylene terephthalate resin, (c) polyamide resin, (d) polyacetal resin, (e) modified polyphenylene ether, (f) fluororesin, or the like); and
(3) super engineering plastic resin (for example, (a) polyphenylene sulfide resin (PP), (b) polysulfone resin (PSF), (c) a polyether sulfone resin (PES), (d) amorphous polyarylate resin (PAR), (e) liquid crystal polymer (LCP), (f) polyether ether ketone resin (PEEK), (g) polyamideimide resin (PAI), (h) polyetherimide resin (PEI), or the like).

Examples of the thermosetting resin include (a) epoxy resin, (b) phenol resin, (c) unsaturated polyester resin, (d) polyurethane resin, (e) melamine resin, and (f) silicone resin.

Examples of the thermoplastic elastomer include styrene-based thermoplastic elastomer, olefin/alkene-based thermoplastic elastomer, vinyl chloride-based thermoplastic elastomer, urethane-based thermoplastic elastomer, and amide-based thermoplastic elastomer.

Also, the resin composition described above can contain various additives such as a lubricant, a light stabilizer, an antistatic agent, a disinfectant, a dispersant, a filler, a flame retardant, an antifreeze, a pH adjuster, a thickener, an ultraviolet absorber, and an antioxidant, as necessary. The concentration of the coated aluminum oxide particles of such a resin composition can be appropriately set, and a high-concentration masterbatch can also be used.

The resin composition described above can be obtained by blending the coated aluminum oxide particles of the present invention into molten resin by means of a kneader machine. The kneader machine may be a commonly used kneader machine, and examples thereof include an intensive mixer such as a single screw extruder, a twin screw extruder, or a Banbury mixer, and a roll forming machine.

The coated aluminum oxide particles of the present invention and the conductive material containing the same can be mixed with a paint resin to form a paint composition. The paint resin is not particularly limited as long as it is generally used for paint applications. For example, various paint resins such as phenol resin, alkyd resin, acrylic alkyd resin, acrylic resin, acrylic emulsion resin, polyester resin, polyester urethane resin, polyether resin, polyolefin resin, polyurethane resin, acrylic urethane resin, epoxy resin, modified epoxy resin, silicone resin, acrylic silicone resin, fluororesin, ethylene-vinyl acetate copolymer, acryl-styrene copolymer, amino resin, methacrylic resin, polycarbonate resin, and polyvinyl chloride resin can be used.

The paint composition of the present invention can contain various additives, solvents, and the like, as necessary. Examples of the additives include various commonly used dispersants, emulsifiers, antifreezes, pH adjusters, thickeners, defoamers, and film-forming agents. Examples of the solvent include an aqueous solvent, a nonaqueous solvent such as alcohol (e.g., methanol, butanol, ethylene glycol, or the like), ester (e.g., ethyl acetate or the like), ether, ketone (e.g., acetone, methyl ethyl ketone, or the like), aromatic hydrocarbon (e.g., toluene, xylene, mineral spirit, or the like), or aliphatic hydrocarbon, or a mixed solvent thereof. The concentration of the coated aluminum oxide particles of such a coating composition can be appropriately set.

In the mixing step with the resin described above, the same method as the mixing step in the preparation of the above solvent composition can be used.

The solvent composition or the coating composition of the present invention can be applied to a substrate and cured to form a paint film. This paint film can be used as a white paint film, as a conductive paint film, or as a white conductive paint film.

As a method for applying the solvent composition or the paint composition of the present invention, general methods such as spin coating, spray coating, roller coating, dip coating, flow coating, knife coating, electrostatic painting, bar coating, die coating, brush coating, and a method for dropping droplets can be used without limitation. A tool used for applying the solvent dispersion or the coating composition can be appropriately selected from known tools such as a spray gun, a roller, a brush, a bar coater, and a doctor blade. The paint film can be obtained by drying and curing after being applied. Further, baking may be performed after drying. The baking conditions can be appropriately set, and for example, in an oxidizing atmosphere, the baking time can be set to about 1 minute or more and 120 minutes or less in a temperature range of 40°C or higher and 200°C or lower. This setting condition enables sufficient baking in the drying furnace of the coil coating line.

Examples of the substrate to which the solvent composition or the paint composition is applied include ceramic products, glass products, metal products, plastic products, and paper products.

### EXAMPLES

The present invention will be described in detail with reference to examples and comparative examples, but the present invention is not limited thereto.

### <Measurement of Chemical Composition>

The measurement was performed by means of a fluorescent X-ray analyzer ZSX Primus IV (manufactured by "Rigaku Corporation"). 10 g of the sample obtained in each of the Examples and the Comparative Examples as described later was weighed, and ground for 10 minutes by means of a grinding machine in a mortar. The ground sample was packed in an aluminum ring (outer diameter: 38 mm, inner diameter: 34 mm, thickness: 5 mm) and compression-molded at 15 tf by means of a hydraulic press machine. The press-molded sample was used for the measurement.

### <Particle Size Distribution>

10 g of the sample obtained in each of the Examples and the Comparative Examples as described later was weighed, and ground for 10 minutes by means of a grinding machine in a mortar. Pure water was added thereto and the mixture obtained thereby was dispersed by means of an ultrasonic cleaner to prepare a dispersion. The particle size distribution of the dispersion was measured by means of a laser diffraction/scattering type particle size distribution measuring apparatus LA-950 (manufactured by "HORIBA, Ltd.") under the following conditions:
Sample refractive index: 1.66 (aluminum oxide);
Solvent refractive index: 1.33 (pure water);
Circulation rate: 3;
Ultrasonic intensity: 4;
Ultrasound time: 4 min 30 sec; and
Agitation intensity: 3.

### <Cumulative Frequency of Particles Having Particle Size Larger Than 1 µm in Volume-based Particle Size Distribution>

The calculation thereof was performed from the particle size distribution obtained as described above.

### <Volume Resistivity>

10 g of the sample obtained in each of the Examples and the Comparative Examples as described later was weighed, and ground for 10 minutes by means of a grinding machine in a mortar. The ground sample was compression molded at a pressure of 9.8 MPa, the volume resistivity thereof was measured by means of a digital multimeter DM7560 (manufactured by "Yokogawa Test & Measurement Corporation"). Here, the volume resistivity thereof was calculated by using the following Equation (1). "Volume resistivity (Ω·cm)" = "Volume resistivity (Q)" × "Electrode area (cm2)" / "Thickness of sample (cm)"

### <Evaluation of Whiteness>

5 g of the sample obtained in each of the Examples and the Comparative Examples as described later was weighed, packed in an aluminum ring (outer diameter: 38 mm, inner diameter: 34 mm, thickness: 5 mm), press-molded at 10 tf by means of a compression molding machine, and L value and b value of the powder thereof were measured by means of a spectrophotometer SD 5000 manufactured by "NIPPON DENSHOKU INDUSTRIES CO., LTD."

### <Example 1>

200 g of aluminum oxide particles (AKP-30 manufactured by "SUMITOMO CHEMICAL COMPANY, LIMITED") was dispersed in 1 L of pure water by means of a stirrer to obtain an aluminum oxide dispersion liquid having a pH of 7 to 8. The dispersion liquid was heated to 70°C while being stirred with a stirrer. The liquid temperature of the aluminum oxide dispersion liquid was maintained at that temperature until the aging step was completed. In addition, 20.7 g of antimony trichloride was dissolved in 118 g of 35 mass% hydrochloric acid, and 138.3 g of a 50 mass% aqueous solution of tin tetrachloride was mixed therein to obtain a hydrochloric acid solution. In the hydrochloric acid solution, Sb₂O₃/SnO₂ was 33.0 mass%, and (Sb₂O₃ + SnO₂)/Al₂O₃ was 26.6 mass%. Next, the pH of the aluminum oxide dispersion liquid was maintained at 7 to 8 and the liquid temperature was maintained at 70°C, and the hydrochloric acid solution and the sodium hydroxide aqueous solution were simultaneously added to the aluminum oxide dispersion liquid over 60 minutes while stirring the aluminum oxide dispersion with a stirrer, thereby obtaining a dispersion of antimony-containing tin hydroxide-coated aluminum oxide particles. Next, as an aging step, 35 mass% hydrochloric acid was added to the dispersion of the antimony-containing tin hydroxide-coated aluminum oxide particles to adjust the pH to 4, and the mixture thereof was stirred at 70°C for 20 minutes. The dispersion obtained in the aging step was filtered, the solid was washed with pure water until the specific conductivity of the filtrate reached 50 µS/cm, and the solid was dried at 110°C for 24 hours. The dried solid was fired, in the atmosphere, at 600°C for 1 hour by means of an electric furnace (manufactured by "KYOEI ELECTRIC KILNS CO., LTD.") to obtain Sample 1 of Example 1. For Sample 1, the cumulative frequency of particles having a particle size of more than 1 µm was calculated to be 12.5%.

### <Example 2>

Sample 2 was obtained in the same manner as in Example 1 except that Sb₂O₃/SnO₂ in the hydrochloric acid solution was changed to 33.3 mass% and (Sb₂O₃ + SnO₂)/Al₂O₃ was changed to 33.3 mass% compared to Example 1. For Sample 2, the cumulative frequency of particles having a particle size of more than 1 µm was calculated to be 13.8%.

### <Example 3>

Sample 3 was obtained in the same manner as in Example 1 except that Sb₂O₃/SnO₂ in the hydrochloric acid solution was changed to 35.0 mass% and (Sb₂O₃ + SnO₂)/Al₂O₃ was changed to 33.0 mass% compared to Example 1. For Sample 3, the cumulative frequency of particles having a particle size of more than 1 µm was calculated to be 20.1%.

### <Example 4>

Sample 4 was obtained in the same manner as in Example 1 except that Sb₂O₃/SnO₂ in the hydrochloric acid solution was changed to 40.0 mass% and (Sb₂O₃ + SnO₂)/Al₂O₃ was changed to 28.0 mass% compared to Example 1. For Sample 4, the cumulative frequency of particles having a particle size of more than 1 µm was calculated to be 19.8%.

### <Example 5>

Sample 5 was obtained in the same manner as in Example 1 except that Sb₂O₃/SnO₂ in the hydrochloric acid solution was changed to 29.7 mass% and (Sb₂O₃ + SnO₂)/Al₂O₃ was changed to 19.5 mass% compared to Example 1. For Sample 5, the cumulative frequency of particles having a particle size of more than 1 µm was calculated to be 16.3%.

### <Example 6>

Sample 6 was obtained in the same manner as in Example 1 except that the pH in the aging step was changed to 5 compared to Example 1. For Sample 6, the cumulative frequency of particles having a particle size of more than 1 µm was calculated to be 15.5%.

### <Example 7>

Sample 7 was obtained in the same manner as in Example 1 except that the pH in the aging step was changed to 6 compared to Example 1. For Sample 7, the cumulative frequency of particles having a particle size of more than 1 µm was calculated to be 16.2%.

### <Example 8>

Sample 8 was obtained in the same manner as in Example 1 except that the pH in the aging step was changed to 7 compared to Example 1. For Sample 8, the cumulative frequency of particles having a particle size of more than 1 µm was calculated to be 15.8%.

### <Example 9>

Sample 9 was obtained in the same manner as in Example 1 except that the liquid temperature of the aluminum oxide dispersion liquid was changed to 90°C and maintained at that temperature until the aging step was completed compared to Example 1.

### <Example 10>

Sample 10 was obtained in the same manner as in Example 1 except that the liquid temperature of the aluminum oxide dispersion liquid was changed to 50°C and maintained at that temperature until the aging step was completed compared to Example 1. For Sample 10, the cumulative frequency of particles having a particle size of more than 1 µm was calculated to be 10.5%.

### <Comparative Example 1>

300 g of aluminum oxide particles (AKP-30 manufactured by "SUMITOMO CHEMICAL COMPANY, LIMITED") was dispersed in 2 L of pure water by means of a stirrer to obtain a dispersion liquid of pH 8. This aluminum oxide dispersion liquid was heated to 70°C while being stirred with a stirrer. Next, 18.1 g of antimony trichloride was dissolved in 779.8 g of 2.4 N hydrochloric acid, and 160.5 g of tin tetrachloride pentahydrate was dissolved therein to obtain a hydrochloric acid solution. In the hydrochloric acid solution, Sb₂O₃/SnO₂ was 16.7 mass%. While maintaining the pH of the aluminum oxide dispersion liquid at 8, 1/5 amount of this hydrochloric acid solution and an ammonia aqueous solution were simultaneously added over 60 minutes, and then while maintaining the pH of the aluminum oxide dispersion liquid at 8, the remaining 4/5 amount of the hydrochloric acid solution and the sodium hydroxide aqueous solution were simultaneously added over 120 minutes, thereby obtaining a dispersion of antimony-containing tin hydroxide-coated aluminum oxide particles. In this case, the aluminum oxide dispersion liquid was stirred with a stirrer while adding each solution to the aluminum oxide dispersion liquid. Next, as an aging step, 2.4 N hydrochloric acid was added to the dispersion of the antimony-containing tin hydroxide-coated aluminum oxide particles to adjust the pH to 4, and the mixture thereof was stirred at 70°C for 60 minutes. The dispersion obtained in the aging step was filtered, the solid was washed with pure water until the specific conductivity of the filtrate reached 50 µS/cm, and the solid was dried at 110°C for 24 hours. The dried solid was fired, in the atmosphere, at 700°C for 1 hour by means of an electric furnace (manufactured by "KYOEI ELECTRIC KILNS CO., LTD.") to obtain Sample 11 of Comparative Example 1. For Sample 11, the cumulative frequency of particles having a particle size of more than 1 µm was calculated to be 21.6%.

### <Comparative Example 2>

Sample 12 of Comparative Example 2 was obtained in the same manner as in Example 1 except that Sb₂O₃/SnO₂ in the hydrochloric acid solution was changed to 20.0 mass% and (Sb₂O₃ + SnO₂)/Al₂O₃ was changed to 24.0 mass% compared to Example 1.

### <Comparative Example 3>

Sample 13 of Comparative Example 3 was obtained in the same manner as in Example 1 except that Sb₂O₃/SnO₂ in the hydrochloric acid solution was changed to 50.0 mass% and (Sb₂O₃ + SnO₂)/Al₂O₃ was changed to 30.0 mass% compared to Example 1.

For each sample of Samples 1 to 13, the content of the antimony component with respect to the content of the tin component (i.e., Sb₂O₃/SnO₂), the total of the content of the tin component and the content of the antimony component with respect to the aluminum oxide particles (i.e., (Sb₂O₃ + SnO₂)/Al₂O₃), the analysis value of the content of the sodium component (i.e., Na₂O), and the volume resistivity are shown in Table 1. It should be noted that the values of Sb₂O₃/SnO₂ (mass%) and (Sb₂O₃ + SnO₂)/Al₂O₃ (mass%) described in Table 1 are analytical values of Samples 1 to 13 that are final products, and are not values in a hydrochloric acid solution.

**[Table 1]**

| | Sb₂O₃ /SnO₂ (mass%) | (Sb₂O₃+SnO₂) /Al₂O₃ (mass%) | Na₂O (mass%) | Volume resistivity (Ω·cm) | L value | b value |
|---|---|---|---|---|---|---|
| Sample1 | 31.4 | 30.1 | 0.00 | 6.5 | 76.84 | -1.08 |
| Sample2 | 32.3 | 37.9 | 0.00 | 6.1 | 73.50 | -0.85 |
| Sample3 | 33.0 | 33.0 | 0.00 | 5.2 | 75.38 | -0.95 |
| Sample4 | 39.0 | 33.0 | 0.00 | 7.1 | 74.49 | -0.58 |
| Sample5 | 28.3 | 21.7 | 0.00 | 31.9 | 81.41 | -1.49 |
| Sample6 | 31.7 | 30.2 | 0.10 | 14.6 | 76.91 | -0.79 |
| Sample7 | 31.4 | 30.4 | 0.22 | 26.0 | 77.70 | -2.16 |
| Sample8 | 31.7 | 30.1 | 0.29 | 39.4 | 78.78 | -3.58 |
| Sample9 | 31.7 | 31.1 | 0.00 | 6.2 | 77.43 | -0.46 |
| Sample10 | 31.5 | 31.2 | 0.00 | 41.1 | 73.13 | -3.18 |
| Sample11 | 16.2 | 30.3 | 0.02 | 62.7 | Not measured | Not measured |
| Sample12 | 19.0 | 25.0 | 0.00 | 62.7 | 86.65 | -0.22 |
| Sample13 | 46.0 | 37.0 | 0.00 | 13.5 | 73.80 | 0.43 |

Table 1 shows that Samples 1 to 10 produced to meet Sb₂O₃/SnO₂ of 26 mass% or more and 45 mass% or less have volume resistivity of 50 Ω·cm or less, and have sufficient conductivity. It can also be seen that the same samples have L values of 60 or more and b values of 0.3 or less, and have sufficient whiteness. On the other hand, it can be seen that when Sb₂O₃/SnO₂ is less than 26 mass% (see Samples 11 and 12), the volume resistivity becomes larger than 50 Q cm, and sufficient conductivity is not obtained. In addition, it can be seen that when Sb₂O₃/SnO₂ is more than 45 mass% (see Sample 13), the b value exceeds 0.3, and sufficient whiteness is not exhibited.

### <Evaluation of Disintegrability>

5 g of each of Sample 1 and Sample 11 was weighed in a 100 ml mayonnaise bottle. Next, 30 g of pure water and 30 g of glass beads (Unibead (registered trademark) UB-2224LN, manufactured by "UNITIKA LTD.") were weighed into each mayonnaise bottle. For each mayonnaise bottle, the time required until the cumulative 50% diameter (D50) in the volume-based particle size distribution became 0.4 µm or less was measured by means of a dispersing machine (Paint Shaker, manufactured by "Red Devil Equipment Company"), and was defined as the disintegrating time.

For Sample 1, the cumulative 50% diameter (D50) became 0.4 µm or less by the disintegrating treatment for 15 minutes. On the other hand, for Sample 11, the cumulative 50% diameter (D50) became 0.4 µm or less by the disintegrating treatment for 20 minutes. Accordingly, it can be seen that when the cumulative frequency of particles having a particle size of more than 1 µm is 21% or less, the disintegrability thereof is excellent. In addition, it has been confirmed that Samples 2 to 8 and Sample 10 are excellent in disintegrability similarly to Sample 1.

### INDUSTRIAL APPLICABILITY

According to the present invention, coated aluminum oxide particles having sufficient electric conductivity can be obtained. Such a material can be used as an alternative material to conductive materials including titanium dioxide particles. In addition, since the coated aluminum oxide particles have sufficient whiteness, the coated aluminum oxide particles can also be used as a white conductive material. The coated aluminum oxide particles can also be used as coated aluminum oxide particles having excellent disintegrability.

## Claims

1. Coated aluminum oxide particles comprising an antimony-doped tin oxide contained in surfaces of aluminum oxide particles, wherein a content of the antimony component with respect to a content of the tin component is 26 mass% or more and 45 mass% or less in terms of oxides as (Sb₂O₃/SnO₂).

2. Coated aluminum oxide particles comprising an antimony-doped tin oxide contained in surfaces of aluminum oxide particles, wherein a content of the antimony component with respect to a content of the tin component is 30 mass% or more and 45 mass% or less in terms of oxides as (Sb₂O₃/SnO₂).

3. The coated aluminum oxide particles according to claim 1 or 2, wherein a content of the antimony-doped tin oxide in terms of oxides (that is, in terms of a total amount of Sb₂O₃ and SnO₂) is 10 mass% or more and 40 mass% or less with respect to an amount of the aluminum oxide particles.

4. The coated aluminum oxide particles according to any one of claims 1 to 3, wherein a content of sodium in terms of oxides of the sodium (that is, in terms of Na₂O) is 0.3 mass% or less with respect to an amount when all constituent components of the coated aluminum oxide particles are expressed as oxides.

5. The coated aluminum oxide particles according to any one of claims 1 to 4, wherein a cumulative frequency of particles having a particle size of more than 1 µm is 21% or less in a volume-based particle size distribution.

6. The coated aluminum oxide particles according to any one of claims 1 to 4, wherein a cumulative frequency of particles having a particle size of more than 1 µm is 20% or less in a volume-based particle size distribution.

7. The coated aluminum oxide particles according to any one of claims 1 to 6, wherein a L value of powder is 70 or more.

8. A conductive material comprising the coated aluminum oxide particles according to any one of claims 1 to 7.

9. A solvent composition comprising the coated aluminum oxide particles according to any one of claims 1 to 7 and a solvent.

10. A resin composition comprising the coated aluminum oxide particles according to any one of claims 1 to 7 and a resin.

11. A paint composition comprising the coated aluminum oxide particles according to any one of claims 1 to 7 and a paint resin.

12. A paint film comprising the paint composition according to claim 11.

13. A method for manufacturing coated aluminum oxide particles, the method comprising:
mixing a hydrochloric acid solution containing an antimony component and a tin component with an alkali in a dispersion liquid containing aluminum oxide particles and an aqueous dispersion medium such that the antimony component with respect to the tin component is contained in an amount of 26 mass% or more and 45 mass% or less in terms of oxides as (Sb₂O₃/SnO₂); and
firing the mixture at a temperature of 400°C or higher and 800°C or lower.

14. A method for manufacturing coated aluminum oxide particles, the method comprising:
mixing a hydrochloric acid solution containing an antimony component and a tin component with an alkali in a dispersion liquid containing aluminum oxide particles and an aqueous dispersion medium such that the antimony component with respect to the tin component is contained in an amount of 30 mass% or more and 45 mass% or less in terms of oxides as (Sb₂O₃/SnO₂);
precipitating a tin hydroxide that contains the antimony component on surfaces of the aluminum oxide particles; and
firing the mixture at a temperature of 400°C or higher and 800°C or lower to be coated with an antimony-doped tin oxide.

15. The method for manufacturing the coated aluminum oxide particles according to claim 13 or 14, wherein a total amount of the tin component and the antimony component that are contained in the hydrochloric acid solution in terms of oxides (that is, in terms of a total amount of Sb₂O₃ and SnO₂) is 10 mass% or more and 40 mass% or less with respect to the amount of the aluminum oxide particles.

16. The method for manufacturing the coated aluminum oxide particles according to any one of claims 13 to 15, wherein a temperature of the dispersion liquid is maintained at 50°C or higher and 95°C or lower while mixing the hydrochloric acid solution containing the tin component and the antimony component with the alkali.

17. The method for manufacturing the coated aluminum oxide particles according to any one of claims 13 to 15, wherein a temperature of the dispersion liquid is maintained at 50°C or higher and 90°C or lower while mixing the hydrochloric acid solution containing the tin component and the antimony component with the alkali.

18. The method for manufacturing the coated aluminum oxide particles according to any one of claims 13 to 17, wherein a pH of the dispersion liquid is maintained at 4 or more and 10 or less while mixing the hydrochloric acid solution containing the tin component and the antimony component with the alkali.

19. The method for manufacturing the coated aluminum oxide particles according to any one of claims 13 to 18, wherein the alkali is sodium hydroxide.
